Europäisches Patentamt

European Patent Office

Office européen des brevets

(11) Publication number: **0 147 625**
**B1**

# (12) EUROPEAN PATENT SPECIFICATION

(45) Date of publication of patent specification: **11.04.90**

(51) Int. Cl.⁵: **D 06 F 37/36, F 16 H 9/14**

(21) Application number: **84114134.4**

(22) Date of filing: **22.11.84**

(54) Speed variator for a laundry washing machine.

(30) Priority: **23.12.83 IT 4573783**

(43) Date of publication of application:
**10.07.85 Bulletin 85/28**

(45) Publication of the grant of the patent:
**11.04.90 Bulletin 90/15**

(84) Designated Contracting States:
**AT BE CH DE FR GB IT LI LU NL SE**

(56) References cited:
**DE-C- 599 462**
**FR-A-1 238 265**
**FR-A-1 284 676**
**FR-A-1 291 581**
**FR-A-1 332 598**
**FR-A-1 455 213**
**FR-E- 79 392**
**FR-E- 84 027**
**FR-E- 85 206**
**GB-A-1 249 759**
**GB-A-2 027 139**
**US-A-3 817 114**

(73) Proprietor: **INDUSTRIE ZANUSSI S.p.A.**
**Via Giardini Cattaneo 3**
**I-33170 Pordenone (IT)**

(72) Inventor: **Durazzani, Piero**
**via Papa Giovanni XXIII**
**I-33080 Porcia Pordenone (IT)**

(74) Representative: **Patentanwälte Grünecker,**
**Kinkeldey, Stockmair & Partner**
**Maximilianstrasse 58**
**D-8000 München 22 (DE)**

Courier Press, Leamington Spa, England.

## Description

The present invention relates to a speed variator for a laundry washing maching for permitting operation of the washing drum thereof at different rotary speeds.

In known laundry washing machines, the operation of the washing drum at predetermined rotary speeds for laundering and centrifuging is accomplished by employing electric motors of conventional type adapted to be automatically switched to different rotary speeds and directly connected to the drum in a per se known manner.

These motors may also be provided with suitable speed variator means permitting the drum to be driven at additional rotary speeds comprised between said rotary speeds for laundering and centrifuging, for carrying out specific laundering phases or for the dynamic equilibration of the drum by gradually increasing the rotary speed thereof from the laundering phase to the centrifuging step.

Known speed variators of this type comprise reduction gears of conventional construction having variable transmission ratios and being mechanically connected between the motor and the drum of the laundry washing machine.

While these reduction gears operate in a satisfactory and reliable manner, they are of rather complicated construction and require a considerable amount of space, so that, from an economical viewpoint they are disadvantageous and inconvenient in use.

Other known speed variators are formed by the respective pulleys associated with the motor and the drum of the washing machine and connected to one another by a V-belt. In this case, at least one of the pulleys is of the variable-diameter type and associated with suitably dimensioned centrifugal weights adapted to radially expand in response to a predetermined rotary speed so as to thereby vary the effective diameter of the pulley, resulting in the V-belt being shifted to a different effective diameter so as to drive the drum at a different transmission ratio. The speed variators of this type are additionally provided with suitable electro-mechanical actuators or hydraulic piston means connected respectively to the electric circuit or the water supply circuit of the laundry washing machine and acting directly on the above described centrifugal weights so as to limit or prevent the radial expansion thereof, whereby to permit the drum to be rotated at speeds between the laundering and centrifuging speeds. (FR—A—1332598).

All the same, the employ of these devices is rather inconvenient for various reasons.

In particular, the electro-mechanical actuators are of rather complicated construction and not overly reliable in operation, while the hydraulic piston means is likewise of complicated construction, requiring a considerable amount of space and extremely accurate adjustment for ensuring satisfactory operation.

It is an object of the present invention to eliminate the shortcomings of the above discussed solutions by providing a speed variator of simple and reliable construction and of reduced dimensions.

According to the invention, a speed variator of this type is substantially embodied in the combination of at least one pulley of the variable diameter type associated with radial expansion centrifugal weights of conventional construction, with at least one tension roller acting on the V-belt driving the drum, said tension roller being adapted to be adjusted to several operating positions by means of at least one hydraulic piston or hydrodynamic piston means so as to vary the tension of said V-belt for thereby limiting or preventing radial expansion of the centrifugal weights. The speed variator according to the invention thus permits variable transmission ratios to be achieved for rotating the drum at varying speeds comprised beween the washing and centrifuging speeds.

These and other objects of the invention are attained by a speed variator for a laundry washing machine comprising a washing tub, a drum rotatably mounted within said tub, and a motor for rotating said drum at washing and centrifuging speeds, said speed variator comprising at least one drive belt operatively connected to respective drive pulleys and driven pulleys of said motor and said drum, and a plurality of centrifugal weights associated with at lest one of said pulleys, preferably said drive pulley having a variable effective diameter, said centrifugal weights being adapted to radially expand in response solely to the centrifuging speed of said motor so as to simultaneously vary the effective diameter of the associated pulley. In accordance with the invention, a speed variator of the above described type is characterized in that it further comprises control means cooperating with said transmission belt so as to exert a counter-action thereon, said control means being adapted to be progressively actuated between a first operating position corresponding to the washing speed or the centrifuging speed of said motor, in which position said control means is in pressure-engagement with said belt, and a second operative position corresponding solely to the centrifuging speed of said motor, in which position said control means is disengaged from said belt.

Further characteristics and advantages of the invention will become more clearly evident from the following description, given by way of example with reference to the accompanying drawings, wherein:

Figure 1 shows a diagrammatic rear view of a laundry washing machine equipped with a speed variator according to the invention,

Figure 2 shows a diagrammatic side view of the laundry washing machine shown in Figure 1, and

Figures 3, 4, 5 and 5a show rear views of laundry washing machines equipped with speed variators according to different embodiments of the invention.

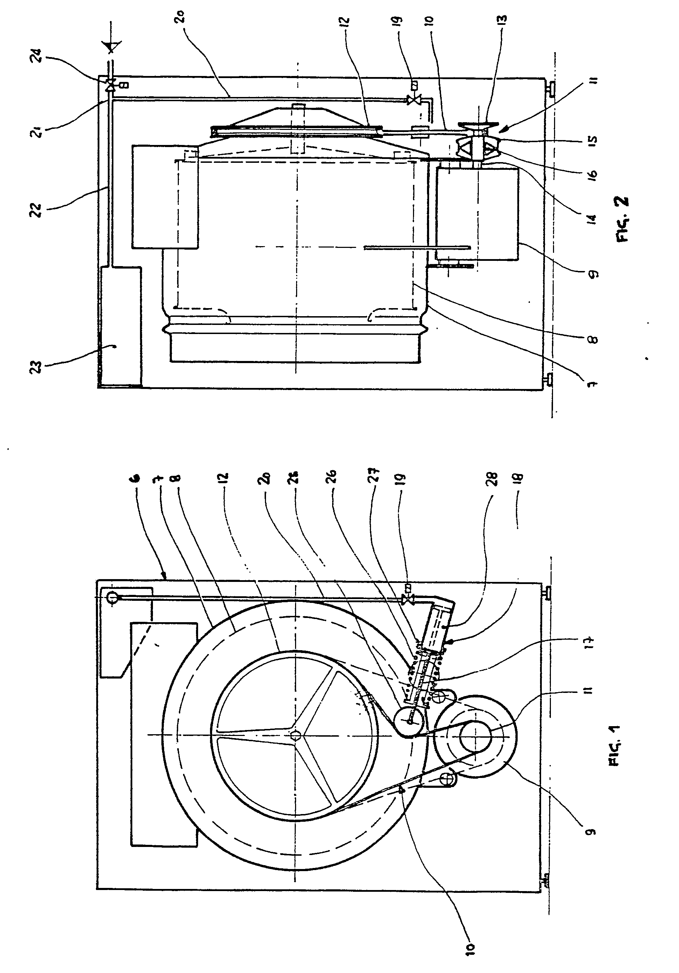

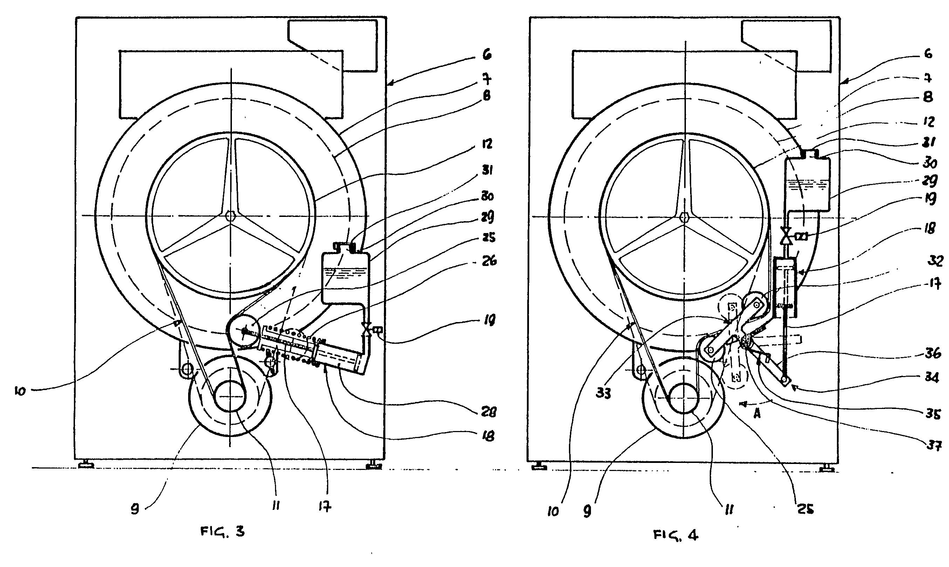

With reference to Figures 1 and 2, there is shown a laundry washing machine 6 having a washing tub 7 and a drum 8 mounted for rotation in tub 7 and adapted to be rotated by an electric motor 9 through transmission means including at least one transmision belt 10 operatively connected between a drive pulley 11 of motor 9 and a driven pulley 12 of drum 8.

In particular, drive pulley 11 comprises a disk 13 secured to a shaft 14 of motor 9, and a further disk 15 adapted to be axially displaced relative to fixed disk 13 and operatively connected to a plurality of radial-expansion centrifugal weights 16.

In this manner, motor 9 is operable to simultaneously rotate drive pulley 11 and centrifugal weights 16. Motor 9 is advantageously designed to operate at two different speeds for rotating drum 8 at a lower washing speed of for instance 55 rpm, and an increased centrifuging speed of for instance 800 rpm, although different rotary speeds may of course also be employed. The same result may of course be obtained by providing driven pulley 12, or even both pulleys 11 and 12, with means for varying their effective diameter, without thereby leaving the scope of the present invention.

Centrifugal weights 16 themselves are dimensioned so as to radially expand in response to motor 9 rotating at the centrifuging speed. This radial expansion of centrifugal weights 16 causes movable disk 15 to be axially displaced towards fixed disk 13 so as to thereby vary the effective diameter of drive pulley 11. In this manner, belt 10 is shifted between varying effective diameters of drive pulley 11, resulting in drum 8 being rotated at varying transmission ratios.

In particular, belt 10 is adapted to be shifted between a position corresponding to the washing speed (shown in continuous lines in Figure 1), and a position corresponding to the centrifuging speed (shown in phantom lines).

In addition to the above described transmission elements, the speed variator according to the invention comprises at least one hydraulic piston 17 reciprocating in an associated cylinder 18, itself connected to a three-way valve 21 through a solenoid valve 19 and a conduit 20. Valve 21 on its part is connected to a conduit 22 of the water supply system of the machine, the latter being connected to a detergent distributor 23 on the one hand, and on the other, to the water mains through a further solenoid valve 24.

Hydraulic piston 17 is provided with a tension roller 25 mounted thereon in a freely rotatable manner, and a compression spring 26 connected at one end to piston 17 and seated at its other end on an annular shoulder 27 formed on the outer surface of cylinder 18.

The piston-cylinder assembly 17, 18 is located within the machine in proximity to transmission belt 10, so that actuation of piston 17 to various operative positions results in tension roller 25 assuming different positions relative to belt 10. The function of the described speed variator is as follows: At the beginning of a washing cycle, solenoid valve 24 is energized so as to admit water from the water mains to the interior of tub 7 through conduit 22 and detergent distributor 23, and to the chamber 28 of cylinder 18 through conduit 20 and solenoid valve 19.

To this effect, solenoid valve 19 is designed and arranged in the water supply system in such a manner that it is opened by the water pressure without requiring to be energized.

The same result may obviously be obtained with a different type of a solenoid valve adapted to be actuated to its open position by being energized under control of the program unit of the machine.

The pressure of the water entering chamber 28 acts in the same direction as compression spring 26, resulting in piston 17 being fully extended from cylinder 18, whereby tension roller 25 is brought into pressure-engagement with transmission belt 10 so as to keep it under tension.

After piston 17 has been fully extended by the action of the water entering chamber 28, solenoid 19 closes, whereupon the pressure of the water enclosed in chamber 28 prevents piston 17 to be pushed back into cylinder 18 by the pressure exerted by belt 10 on tension roller 25 during rotation of drum 8.

Under these conditions, motor 9 initially rotates at the washing speed, with drive pulley 11 being at its smallest effective diameter due to disks 13 and 15 being at their maximum distance, resulting from centrifugal weights 16 not being radially expanded.

At a later instant motor 9 is switched to the centrifuging speed, whereby drum 8 is rotated at a higher speed without, however, being initially permitted to attain its maximum centrifuging speed.

This is because tension roller 25 and piston 17 are still maintained in their above described position, in which spring 26 and the pressure of the water in chamber 28 coact to maintain tension roller 25 in pressure-engagement with belt 10 with a force exceeding that generated by the radial expansion of centrifugal weights 16, so that movable disk 15 of drive pulley 11 is prevented from being moved towards fixed disk 13.

As a result, the effective diameter of drive pulley 11 is not varied, so that drum 8 is rotated at an intermediate speed comprised between the laundering and centrifuging speeds.

The described example provides for an intermediate speed of about 400 to 500 rpm prior to the execution of the centrifuging phase at the maximum rotary speed of the drum.

With this arrangement it is also possible to achieve a gradual and progressive increase of the rotary speed of the drum by repeatedly energizing solenoid valve 19 at predetermined intervals, so that the pressure exerted on tension roller 25 by belt 10 is effective to gradually push piston 17 into cylinder 18 against the action of spring 26, the water being contained in chamber 28 being discharged into the tub through conduits 20 and 22 and detergent distributor 23.

The resulting relaxation of belt 10 permits centrifugal weights 16 to radially expand, so that the effective diameter of drive pulley 11 is gradually increased to result in a corresponding increase of the rotary speed of drum 8.

At the centrifuging speed of the drum, piston 17 is fully retracted into cylinder 18 in the manner described above, and belt 10 assumes the configuration indicated by phantom lines in Figure 1 in which it is no longer contacted by tension roller 25, the latter being in its fully retracted position.

During successive operations the drum may thus be rotated at the laundering, intermediate and centrifuging speeds by repeating the above described operations.

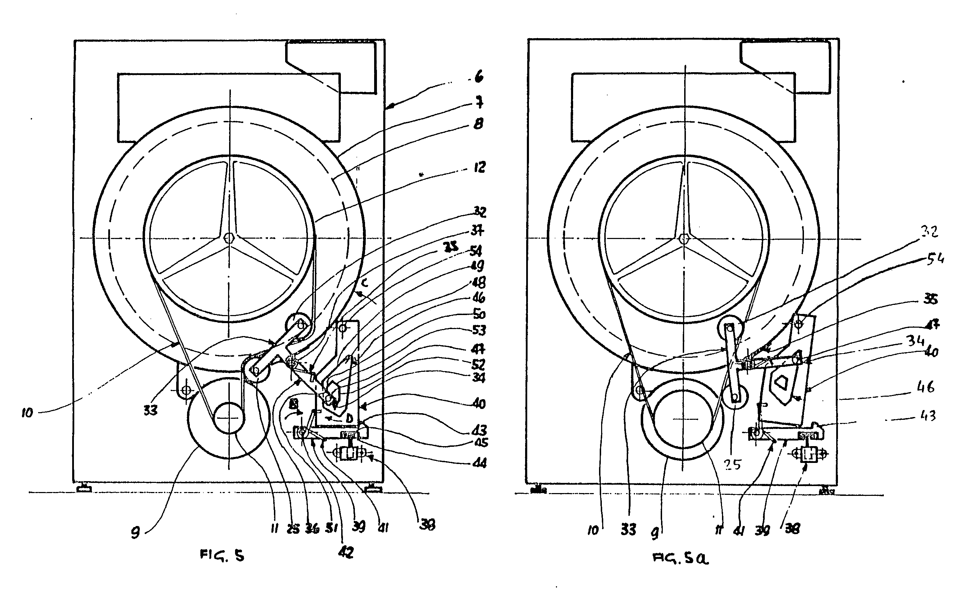

Figure 3 shows a second embodiment of the speed variator according to the invention. In this embodiment, the speed variator includes substantially the same mechanical and hydraulic components as the speed variator described above, such components being therefore designated by the same reference numerals, while cylinder 18 in this case is connected to a separate reservoir 29 instead of to the water supply circuit as in the preceding example.

Reservoir 29 has its top portion formed with a mouth 30 for introduction of a predetermined amount of a liquid and adapted to be closed by a threaded cap 31.

The liquid contained in reservoir 29 flows into chamber 28 of cylinder 18 to fill it while piston 17 is kept at its extended position by the action of spring 26 and the pressure of the liquid flowing into cylinder 18 from reservoir 29. This embodiment of the speed variator permits the drum to be rotated at the laundering, intermediate and centrifuging speeds in the same manner as the speed variator described above.

In this embodiment it is even possible to eliminate compression spring 26 by employing the pressure of the liquid contained in reservoir 29 and the pressure exerted by belt 10, respectively, for moving piston 17 with its tension roller 25 back and forth. In this case, however, a certain pressure has to be maintained in reservoir 29, necessitating its being hermetically sealed.

The use of a pressurized reservoir results in piston 17 being extended from cylinder 18 and thus in pressure-engagement of tension roller 25 with belt 10. The tension roller is kept in this extended position until solenoid valve 19 is energized to permit the liquid to be returned to reservoir 29 by the pressure exerted on tension roller 25 and piston 17 by belt 10.

With reference to Figure 4, there is shown a third embodiment of the speed variator according to the invention. The mechanical and hydraulic components constituting this embodiment are similar to those of the embodiment shown in Figure 3 and are therefore designated by the same reference numerals. In this embodiment, transmission belt 10 is tensioned by means of two tension rollers 25 and 32 mounted for free rotation at opposite ends of an arm 33 of a T-shaped lever 34 pivoted to the frame of the machine in proximity to belt 10 with interposition of a torsion spring 35 biasing it in the direction of arrow A. Lever 34 is formed with a further arm 36 hingedly connected to the free end of piston 17, so that the displacement of piston 17 results in rotation of lever 34 about its mounting pin 37 to adjust tension rollers 25 and 32 to various positions with respect to belt 10.

In this embodiment, cylinder 18 is preferably disposed vertically resulting in a speed variator of compact construction and reduced dimensions.

This speed variator operates substantially in the same manner as the one described with reference to Figure 3.

As an alternative, cylinder 18 of this embodiment may also be connected directly to conduit 22 of the machine. In this case reservoir 29 is eliminated as shown in Figure 1.

Figure 5 finally shows a fourth embodiment of the speed variator according to the invention, comprising a T-shaped lever 34 carrying two tension rollers 25 and 32 as in Figure 4, said lever being adapted to be actuated to various operative positions by means of a solenoid 38 through two further levers 39 and 40 mounted in the frame of the machine and biased in the direction of arrows B and C by a torsion spring 41 mounted on the mounting pin 42 of lever 39.

In particular, lever 39 is formed with a lug 43 adapted to engage lever 40, and additionally provided with a recess 44 for engagement with the armature 45 of solenoid 38. The other lever 40 on its part is formed with a guide window 46 for guiding the movements of a stud 47 projecting from arm 36 of T-lever 34.

Guide window 46 includes a recessed portion 48 defined between an outer rim portion 49 and interior edge portions 50, 51, 52, 53 connected to one another and adapted to guide stud 47 in the direction of arrow D, resulting in successive angular displacements of T-lever 34 about its mounting pin 37. The speed variator of this embodiment operates as follows: At the beginning of the laundering cycle, solenoid 38 is not energized, lever 39 being maintained in its raised position by the associated spring 41. In this position, lug 43 of lever 39 is engaged with lever 40 so as to prevent it from rotating about its mounting pin 54.

Also in this position, T-lever 34 is retained in the position shown in Figure 5 by stud 47 of arm 36 abutting the inclined edge portion 51 of window 46 in lever 40. As a result, tension rollers 25 and 32 cooperate to keep transmission belt 10 under sufficient tension for maintaining drive pulley 11 at its minimum effective diameter so as to rotate drum 8 at its laundering speed. At the end of the laundering phase, motor 9 is switched to the centrifuging speed, while solenoid 38 is maintained at its deenergized state so that the effective diameter of drive pulley 11 is not varied. As a result, drum 8 is rotated at an intermediate speed comprised between the laundering and the centrifuging speeds, prior to being rotated at the centrifuging speed.

For finally attaining the centrifuging speed, solenoid 38 is energized, whereby lever 39 is displaced to its lowered position.

As a result, lug 43 of lever 39 is disengaged from lever 40, permitting the latter to rotate about pin 54 under the bias of spring 41, whereby T-lever 34 is permitted to be rotated about pin 37 to the position shown in Figure 5a by the movement of stud 47 along inclined inner edge portions 51 and 50 of guide window 46. In this position, tension rollers 25 and 32 are disengaged from drive belt 10, permitting drive pulley 11 to assume its maximum effective diameter under the effect of the radial expansion of the above described centrifugal weights. As a result, drum 8 is now rotated at the centrifuging speed.

At the end of the centrifuging phase, torsion spring 35 acts to return levers 34 and 40 to the initial position, in which lever 40 is engaged by lug 43 of lever 39, and in which tension rollers 25 and 32 are again engaged with transmission belt 10 so as to keep it tensioned.

The speed variator according to the invention is of simplified construction as compared to known speed variator constructions, and ensures a more reliable operation of the laundry washing machine. In addition, the described speed variator is of reduced dimensions and permits the washing drum to be rotated at varying speeds.

**Claims**

1. A speed variator for a laundry washing machine having a washing tub, a rotatable drum mounted in said tub, and a motor for rotating said drum at the washing or centrifuging speeds, said speed variator including at least one transmission belt connected between a drive pulley and a driven pulley of said motor and said drum, respectively, and a number of centrifugal weights associated with at least one of said pulleys, preferably said drive pulley, said pulley being of the variable diameter type, said centrifugal weights being adapted to radially expand on rotation of said motor solely at the centrifuging speed so as to vary the effective diameter of the associated pulley, characterized in that it additionally comprises control means (17, 18, 25; 32, 34; 39, 40) cooperating with said transmission belt (10) so as to exert a tensioning force thereon, said control means being adapted to be progressively actuated between a first operating position corresponding to rotation of said motor (9) at said washing and centrifuging speed, for exerting said tensioning force on said belt (10), and a second operating position corresponding to the rotation of said motor (9) solely at said centrifuging speed, in which said control means is disengaged from said belt (10).

2. A speed variator according to Claim 1, characterized in that said control means includes a hydraulic piston (17) guided for reciprocating displacement in a cylinder (18) communicating with a water supply conduit (22) of the machine through at least one solenoid valve (19) or the like, said piston carrying at least one tension roller (25) mounted in a freely rotatable manner, a compression spring (26) or the like associated with said piston biasing said tension roller into engagement with said belt (10), said solenoid valve being operable to admit a liquid to said cylinder and to drain it therefrom, respectively.

3. A speed variator according to Claim 1, characterized in that said control means includes a hydraulic piston (17) guided for reciprocating displacement in a cylinder (18) communicating through at least one solenoid valve (19) with a separate reservoir (29) having a top opening (30) adapted to be closed by a threaded closure member (31) for the supply of a liquid to said reservoir, said piston being provided with at least one tension roller (25) mounted thereon in a freely rotatable manner, and at least one compression spring (26) or the like for biasing said tension roller into engagement with said belt (10), said solenoid valve being operable to admit said liquid to said cylinder and to drain it therefrom, respectively.

4. A speed variator according to Claim 3, characterized in that said piston (17) of said cylinder (18) is hingedly connected to one arm (36) of a T-lever (34) pivotally mounted on the machine and having a further arm (33) carrying at least two tension rollers (25, 32) mounted thereon in a freely rotatable manner, at least one torsion spring (35) or the like cooperating with said T-lever for biasing said tension rollers into engagement with said belt (10).

5. A speed variator according to Claim 1, characterized in that said control means includes a first lever (39) pivotally mounted on the machine and formed with a lug (43) and provided with a torsion spring (41), said lever being adapted to be actuated between two operating positions with the aid of a solenoid (38) or the like, and a second lever (40) adapted to be retained and released by said lug and formed with a guide window (46) having inclined guide surfaces (50, 51, 52, 53) for guiding therealong a stud (47) projecting from an arm (36) of a T-lever (34) pivotally mounted on the machine in association with a further torsion spring (35) and having a further arm (33) carrying at least two tension rollers (25, 32) mounted thereon in a freely rotatable manner, said levers (39, 40) being biased by said torsion springs (41, 35) so as to keep said tension rollers in pressure-engagement with said belt (10).

**Patentansprüche**

1. Geschwindigkeitsversteller für eine Waschmaschine mit einem Waschbottich, einer drehbar darin gelagerten Trommel und einem Motor zum Drehen der Trommel bei Wasch- oder Schleuderdrehzahlen, welcher Geschwindigkeitsversteller wenigstens einen Übertragungsriemen enthält, der zwischen einer treibenden Riemenscheibe und einer getriebenen Riemenscheibe des Motors bzw. der Trommel angeordnet ist, und mit mehreren Fliehgewichten, die wenigstens einer der Riemenscheiben, vorzugsweise der treibenden Riemenscheibe, zugeordnet sind, welche Riemenscheibe im Durchmesser variiert werden kann, wobei die Fliehegewichte dazu eingerichtet sind, bei Drehung des Motors allein bei der Schleuderdrehzahl radial nach außen zu wandern, um den wirksamen Durchmesser der zugeordneten Riemenscheibe zu verändern dadurch gekennzeichnet, daß er außerdem eine Steuereinrichtung (17, 18, 25; 32, 34; 39, 40) enthält, die mit dem Übertragungsriemen (10) zusammenwirkt, um eine Spannkraft daran hervorzurufen, welche Steuereinrichtung dazu eingerichtet ist, progressiv zwischen einer ersten Betriebsstellung, die der Drehung des Motors (9) bei Waschdrehzahl und Schleuderdrehzahl entspricht, um die Spannkraft auf den Riemen (10) auszuüben, und einer zweiten Betriebsstellung, die der Drehung des Motors (9) allein mit der Schleuderdrehzahl entspricht, in der die Steuereinrichtung von dem Riemen (10) gelöst ist, betätigt zu werden.

2. Geschwindigkeitsversteller nach Anspruch 1, dadurch gekennzeichnet, daß die Steuereinrichtung einen hydraulischen Kolben (17) enthält, der zur Hin- und Herbewegung in einem Zylinder (18) geführt ist, der mit einer Wasserzuführleitung (22) der Maschine über wenigstens ein Elektromagnetventil (19) oder dgl. verbunden ist, welcher Kolben wenigstens eine Spannrolle (25) in frei drehbarer Weise trägt, wobei eine Druckfeder (26) oder dgl., die dem Kolben zugeordnet ist, die Spannrolle in Anlage an den Riemen (10) drückt, welches Elektromagnetventil dazu betätigbar ist, eine Flüssigkeit in den Zylinder einzuleiten bzw. daraus abzuleiten.

3. Geschwindigkeitsversteller nach Anspruch 1, dadurch gekennzeichnet, daß die Steuereinrichtung einen hydraulischen Kolben (17) enthält, der zur Hin- und Herbewegung in einem Zylinder (18) geführt ist, der über wenigstens ein Elektromagnetventil (19) mit einem getrennten Behälter (29) verbunden ist, der eine obere Öffnung (30) aufweist, die dazu eingerichtet ist, von einem Gewindeverschlußelement (31) verschlossen zu werden, zur Zuführung einer Flüssigkeit in den Behälter, welcher Kolben mit wenigstens einer Spannrolle (25) versehen ist, die daran in frei drehbarer Weise gelagert ist, und mit wenigstens einer Druckfeder (26) oder dgl. zum Vorspannen der Spannrolle in Anlage an den Riemen (10), wobei das Elektromagnetventil dazu betriebsfähig ist, die Flüssigkeit in den Zylinder einzuleiten bzw. daraus auszuleiten.

4. Geschwindigkeitsversteller nach Anspruch 3, dadurch gekennzeichnet, daß der Kolben (17) des Zylinders (18) gelenkig mit einem Arm (36) eines T-Hebels (34) verbunden ist, der schwenkbar an der Maschine gelagert ist und einen weiteren Arm (33) aufweist, der wenigstens zwei Spannrollen (25, 32) trägt, die daran frei drehbar gelagert sind, wobei wenigstens eine Torsionsfeder (35) oder dgl. mit dem T-Hebel zusammenwirkt, um die Spannrollen in Anlage in den Riemen (10) vorzuspannen.

5. Geschwindigkeitsversteller nach Anspruch 1, dadurch gekennzeichnet, daß die Steuereinrichtung enthält: einen ersten Hebel (39), der schwenkbar an der Maschine gelagert ist und mit einer Nase (43) und mit einer Torsionsfeder (41) versehen ist, welcher Hebel dazu eingerichtet ist, zwischen zwei Betriebsstellungen mit Hilfe eines Elektromagneten (38) oder dgl. betätigt zu werden, und einen zweiten Hebel (40), der dazu eingerichtet ist, von der Nase gehalten und losgelassen zu werden, und der mit einem Führungsfenster (46) versehen ist, das geneigte Führungsflächen (50, 51, 52, 53) aufweist, um einen Zapfen (47) daran entlangzuführen, der von einem Arm (36) eines T-Hebels (34) vorsteht, der schwenkbar an der Maschine gelagert ist und dem eine weitere Torsionsfeder (35) zugeordnet ist und der einen weiteren Arm (33) aufweist, der wenigstens zwei Spannrollen (25, 32) trägt, die an ihm frei drehbar gelagert sind, welche Hebel (39, 40) durch die genannten Torsionsfedern (41, 35) derart vorgespannt sind, daß sie die Spannrollen in Druckanlage an dem Riemen (10) halten.

**Revendications**

1. Variateur de vitesse pour une machine à laver le linge ayant une cuve de lavage, un tambour rotatif monté dans la cuve, et un moteur pour faire tourner le tambour à la vitesse de lavage ou à la vitesse de centrifugation, ce variateur de vitesse comportant au moins une courroie de transmission montée entre une poulie d'entraînement du moteur et une poulie entraînée du tambour respectivement, et un certain nombre de masselottes centrifuges associées à l'une au moins de ces poulies, de préférence la poulie d'entraînement, cette poulie ayant un diamètre variable, les masselottes centrifuges étant adaptées pour s'écarter radialement seulement lorsque le moteur tourne à la vitesse de centrifugation de façon à faire varier le diamètre effectif de la poulie associée, caractérisé en ce qu'il comporte en outre des moyens de commande (17, 18, 25; 32, 34; 39, 40) coopérant avec cette courroie de transmission (10) de façon à exercer sur elle une force de tension, ces moyens de commande étant adaptés pour être actionnés progressivement entre une première position fonctionelle correspondant à la rotation du moteur (9) tournant à sa vitesse de lavage et à sa vitesse de centrifugation pour exercer cette force de tension sur la courroie (10), et une deuxième position fonctionnelle correspondant à la rotation du moteur (9) seulement à la vitesse de centrifugation, dans laquelle les moyens de commande sont dégagés de la courroie (10).

2. Variateur de vitesse selon la revendication 1, caractérisé en ce que les moyens de commande comportent un piston hydraulique (17) guidé pour se déplacer dans les deux sens dans un cylindre (18) communiquant avec un conduit d'alimentation en eau (22) de la machine par l'intermédiaire d'au moins une électrovanne (19) ou analogue, ce piston portant au moins un galet de tension (25) monté de façon à pouvoir tourner librement, un ressort de compression (26) ou analogue associé au piston rappelant le galet de tension en prise avec la courroie (10), cette électrovanne pouvant fonctionner pour admettre un liquide dans le cylindre et pour l'en évacuer respectivement.

3. Variateur de vitesse selon la revendication 1, caractérisé en ce que les moyens de commande comportent un piston hydraulique (17) guidé pour se déplacer dans les deux sens dans un cylindre (18) communiquant par l'intermédiaire d'au moins une électrovanne (19) avec un réservoir séparé (29) ayant une ouverture supérieure (30) adaptée pour être fermée par un élément de fermeture fileté (31) pour fournir un liquide à ce réservoir, ce piston étant équipé d'au moins un galet de tension (25) monté sur lui de façon à pourvoir tourner librement, et au moins un ressort de compression (26) ou analogue, pour rappeler le galet de tension en prise avec la courroie (10), cette électrovanne pouvant être actionnée pour admettre le liquide dans le cylindre et pour l'en évacuer respectivement.

4. Variateur de vitesse selon la revendication 3, caractérisé en ce que le piston (17) du cylindre (18) est articulé sur un bras (36) d'un levier en forme de T (34) monté, pivotant, sur la machine et ayant un autre bras (33) portant au moins deux galets de tension (25, 32) montés sur lui de façon à pourvoir tourner librement, au moins un ressort de torsion (35) ou analogue coopérant avec le levier en forme de T pour rappeler les galets de tension en prise avec la courroie (10).

5. Variateur de vitesse selon la revendication 1, caractérisé en ce que les moyens de commande comportent un premier levier (39) monté, pivotant, sur la machine, comportant un bec (43) et équipé d'un ressort de torsion (41), ce levier étant adapté pour être actionné entre deux positions fonctionnelles à l'aide d'un solénoïde (38) ou analogue, et un deuxième levier (40) adapté pour être retenu et libéré par ce bec et comportant une fenêtre de guidage (46) ayant des surfaces de guidage inclinées (50, 51, 52, 53) pour le guidage le long de cette fenêtre d'un téton (47) se projetant d'un bras (36) d'un levier en T (34) monté, pivotant, sur la machine en association avec un autre ressort de torsion (35) et ayant un autre bras (33) portant au moins deux galets de tension (25, 32) montés sur lui de manière à pouvoir tourner librement, ces leviers (39, 40) étant rappelés par des ressorts de torsion (41, 35) de façon à maintenir les galets de tension en coopération de pression avec la courroie (10).

FIG. 1

FIG. 2

EP 0 147 625 B1

FIG. 4

FIG. 3

2

FIG. 5a.

FIG. 5